# EUROPEAN PATENT APPLICATION

(11) **EP 2 547 045 A1**
(43) Date of publication of application: **16.01.2013**
(21) Application number: 12175722.3
(22) Date of filing: 10.07.2012
(51) Int. Cl.: H04L 12/40

(54) **Field communication system**

(30) Priority: 15.07.2011 JP 2011156538
(71) Applicant: Yokogawa Electric Corporation, Tokyo 180-8750 (JP)
(72) Inventor: Sueki, Masanori, Tokyo, 180-8750 (JP); Emori, Toshiyuki, Tokyo, 180-8750 (JP); Mizushima, Fuyuki, Tokyo, 180-8750 (JP)
(74) Representative: Henkel, Breuer & Partner

(57) **Abstract**

A field communication system includes a field device as a slave device, having a first slave communication port and a second slave communication port, a communication module as a master device, having first master communication port and a second master communication port, configured to execute communication with the field device, a first communication line configured to connect the first slave communication port with the first master communication port, and a second communication line configured to connect the second slave communication port with the second master communication port.

## Description

### BACKGROUND

### TECHNICAL FIELD

The present disclosure relates to a field communication system which executes communication between field devices as slave devices and communication modules as master devices.

### RELATED ART

A pair of PROFIBUS communication modules are mounted for one controller to form a redundancy configuration. On the other hand, each slave device supporting a slave redundancy specification according to the PROFIBUS standard has two ports to which the communication modules of the redundancy configuration are connected respectively to form a PROFIBUS slave redundancy configuration.

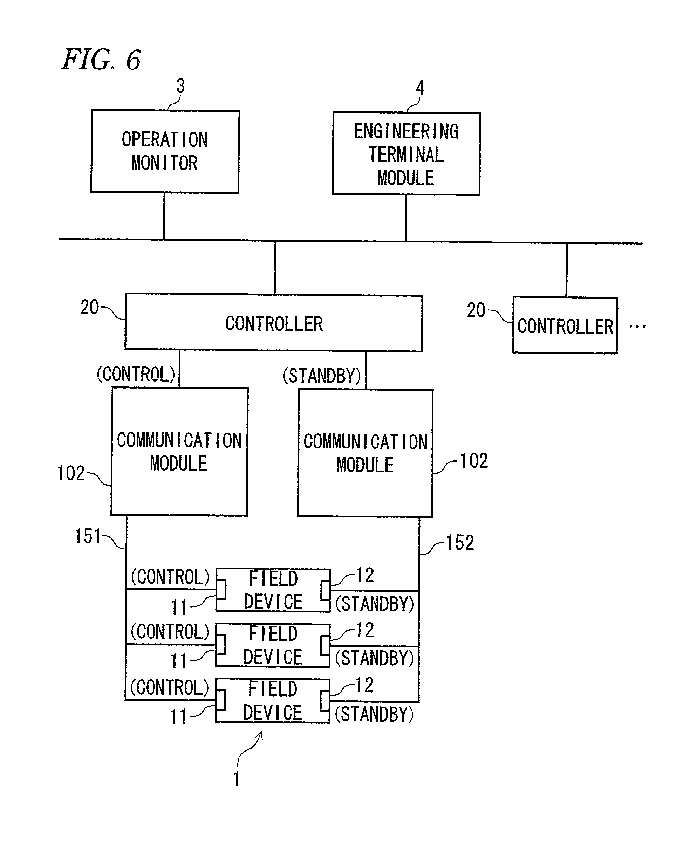

Fig. 6 is a block diagram showing a configuration of a field control system having a PROFIBUS slave redundancy configuration.

As shown in Fig. 6, the field control system has field devices 1, 1, ..., controllers 20, 20, ... disposed and distributed in a plant, communication modules 102 and 102 mounted correspondingly to each controller 20, an operation monitor 3 for operating and monitoring the field devices 1, 1, ... through the controllers 20, 20, ..., and an engineering terminal module 4 for carrying out engineering operation on the field devices 1, 1, ...

The field devices 1, 1, ... are slave devices each supporting a slave redundancy specification according to the PROFIBUS standard. Each field device 1 has a first port 11 and a second port 12.

The communication modules 102 and 102 are mounted as paired modules for one controller 20 to form a redundancy configuration in such a manner that one of the communication modules 102 and 102 serves as a control-side module while the other serves as a standby-side module. When a failure occurs in the control-side module, the control-side module and the standby-side module are switched to each other in role so that a communication process can be continued.

The communication modules 102 and 102 operate as master devices respectively. In each field device 1 serving as a slave device having a redundancy function, one of the first port 11 and the second port 12 serves as a control-side port and the other serves as a standby-side port to perform master-slave communication with the communication modules 102 and 102 through segments 151 and 152 respectively.

The controller 20 outputs the same data to the first port 11 and the second port 12 which are two ports of each field device 1 serving as a slave device, through the two communication modules 102 and 102. Of the data, data (output data) outputted to the control-side port of the field device 1 are used actually. In addition, the controller 20 receives data (input data) outputted from the control-side port of the field device 1, through the control-side module of the two communication modules 102 and 102.

The following two patterns are provided for switching the control between the ports of the field device 1 serving as a slave device (switching between the control side and the standby side).
(1) Switching made by the controller 20 by writing a command into a control register of the field device 1.
(2) Switching made by the field device 1 itself by detecting a failure in self-diagnosis.
When there occurs a failure in the communication module connected to the control-side port of the field device 1 serving as a slave device, master-slave communication on the communication line (segment) therebetween is disconnected. Thus, the control of the communication module is switched (the communication module serving as a standby-side module is changed to the control side) while the field device 1 serving as a slave device detects a failure in communication with the communication module and changes the other port serving as a standby-side port to the control side to continue the communication.

### [Prior Technical Document]

### [Patent Document]

[Patent Document 1] JP-A-2005-32087 (Fig. 3)

In the field control system shown in Fig. 6, when there occurs a single failure, that is, only one of a failure in a communication module and a failure in one port of a slave device, the control of the communication module or the control of the port of the slave device is switched to prevent the communication from being disconnected. However, occurrence of a double failure may lead to disconnection of the communication. For example, when one port of a slave device is set as a control-side port and a failure occurs in the other port of the slave device, communication with the slave device cannot be continued if there occurs a failure in the communication module connected to the control-side port of the slave device.

### SUMMARY

One or more exemplary embodiments of the present invention provide a field communication system in which the reliability of master-slave communication can be improved.

A field communication system includes a field device as a slave device, having a first slave communication port and a second slave communication port, a communication module as a master device, having first master communication port and a second master communication port, configured to execute communication with the field device, a first communication line configured to connect the first slave communication port with the first master communication port, and a second communication line configured to connect the second slave communication port with the second master communication port.
According to the field communication system, the first slave communication port and the first master communication port are connected to each other through the first communication line, and the second slave communication port and the second master communication port are connected to each other through the second communication line, so that the reliability of communication can be improved by use of the first master communication port and the second master communication port provided in the communication module.

### BRIEF DESCRIPTION OF THE DRAWINGS

The above and other aspects of the present invention will become more apparent from the following description of exemplary embodiments, taken in conjunction with the accompanying drawings of which:
Fig. 1 is an exemplary block diagram showing the configuration of a field control system as a field communication system according to a first embodiment.
Fig. 2A is an exemplary view showing a state where assignments of the ports of the field device to the control/standby sides are different among the field devices.
Fig. 2B is an exemplary view showing a state where a failure has occurred in the communication module 2A in the state of Fig. 2A.
Fig. 3 is an exemplary block diagram showing the configuration of a field control system as a field communication system according to a second embodiment.
Fig. 4 is an exemplary block diagram showing the configuration of a field control system as a field communication system according to a third embodiment.
Fig. 5 is an exemplary view showing a configuration in which one-port field devices is supported by use of the field communication system according to the embodiment.
Fig. 6 is a block diagram showing a configuration of a field control system having a PROFIBUS slave redundancy configuration.

### DETAILED DESCRIPTION

Exemplary embodiments of a field communication system according to the invention will be described below.

### [First Embodiment]

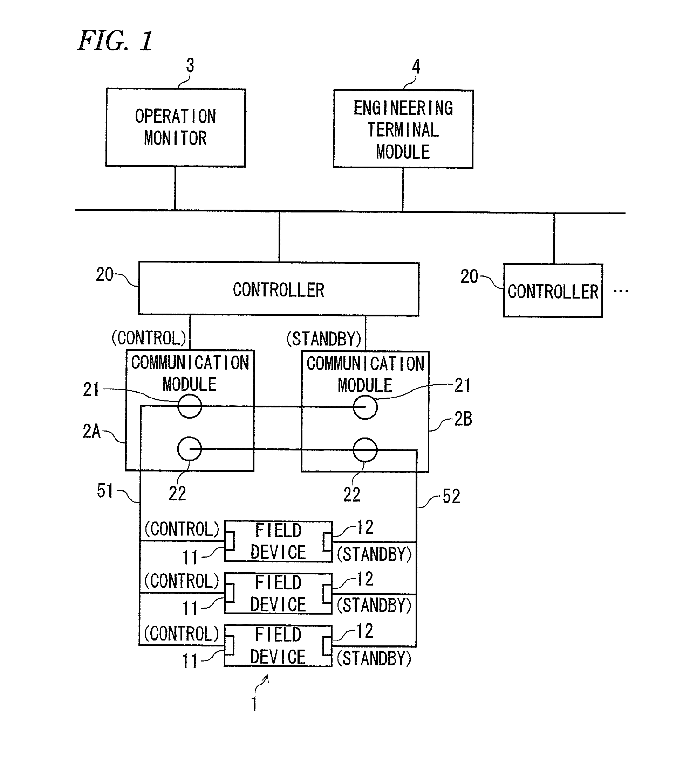

Fig. 1 is a block diagram showing the configuration of a field control system as a field communication system according to a first embodiment.

As shown in Fig. 1, the field control system has field devices 1, 1, ..., controllers 20, 20, ... disposed and distributed in a plant, communication modules 2A and 2B mounted correspondingly to each controller 20, an operation monitor 3 for operating and monitoring the field devices 1, 1, ... through the controllers 20, 20, ..., and an engineering terminal module 4 for carrying out engineering operation on the field devices 1, 1, ... The field devices 1, 1, ... shown in Fig. 1 indicate a group of field devices having various functions, such as sensors, valves, etc., but do not represent a group of devices having one and the same model.

The field devices 1, 1, ... are slave devices each supporting a slave redundancy specification according to the PROFIBUS standard. Each field device 1 has a first port 11 and a second port 12.

The communication modules 2A and 2B are mounted as paired modules for one controller 20 to form a redundancy configuration in such a manner that one of the communication modules 2A and 2B serves as a control-side module while the other serves as a standby-side module. When a failure occurs in the control-side module, the control-side module and the standby-side module are switched to each other in role so that a communication process can be continued.

The communication modules 2A and 2B operate as master devices respectively. In each field device 1 serving as a slave device having a redundancy function, one of the first port 11 and the second port 12 serves as a control-side port and the other serves as a standby-side port to perform master-slave communication with the communication modules 2A and 2B through segments (communication lines 51 and 52 which will be described later) respectively.

The controller 20 outputs the same data to the first port 11 and the second port 12 which are two ports of each field device 1 serving as a slave device, through the two communication modules 2A and 2B. Of the data, data (output data) outputted to the control-side port of the field device 1 are used actually. In addition, the controller 20 receives data (input data) outputted from the control-side port of the field device 1, through the control-side module of the two communication modules 2A and 2B.

The following two patterns are provided for switching the control between the ports of the field device 1 serving as a slave device (switching between the control side and the standby side).
(1) Switching made by the controller 20 by writing a command into a control register of the field device 1.
(2) Switching made by the field device 1 itself by detecting a failure in self-diagnosis.
When there occurs a failure in the communication module connected to the control-side port of the field device 1 serving as a slave device, master-slave communication on the segment therebetween is disconnected. Thus, the control of the communication module is switched (the communication module serving as a standby-side module is changed to the control side) while the field device 1 serving as a slave device detects a failure in communication with the communication module and changes the other port serving as a standby-side port to the control side to continue the communication.

Next, description will be made on the characteristic configuration in the embodiment.

As shown in Fig. 1, in the field communication system according to the embodiment, a first port 21 and a second port 22 are provided in each of the communication module 2A and the communication module 2B.

In addition, a first communication line 51 is connected to the first port 21 of the communication module 2A, the first port 21 of the communication module 2B and the first ports 11, 11, ... of the field devices 1, 1, ..., and a second communication line 52 is connected to the second port 22 of the communication module 2A, the second port 22 of the communication module 2B and the second ports 12, 12, ... of the field devices 1, 1, ...

In the embodiment, the communication module serving as a control-side module (hereinafter also referred as control-side communication module) exchanges data with the field devices 1, 1, ... and the communication module serving as a standby-side module (hereinafter also referred as standby-side communication module) monitors the operation/suspension of the control-side communication module. The control-side communication module notifies the controller 20 of the state of communication with the field devices 1, 1, ... and the standby-side communication module notifies the controller 20 of the state of the control-side communication module. The controller 20 makes a comprehensive judgment based on those notifications and determines which communication module, i.e. the communication module 2A or the communication module 2B, control should be granted to (i.e., which communication module should be set as the control-side module).

The communication module to which control is granted exchanges data with the field devices 1, ... serving as slave devices. On this occasion, both the first port 21 and the second port 22 of the control-side communication module perform similar communication as masters. For example, in Fig. 1, control has been granted to the communication module 2A, and the first port 21 and the second port 22 of the communication module 2A perform similar communication.

Although the controller 20 outputs the same data to the first port 21 and the second port 22 of the control-side communication module, only the data outputted to the control-side ports of the field devices 1, 1, ... are valid. That is, in Fig. 1, the controller 20 outputs one and the same data to the first communication line 51 and the second communication line 52 through the communication module 2A. However, only the data outputted to the first ports 11 of the field devices 1, 1, ... are used. In addition, the controller 20 receives input data from the first ports 11 of the field devices 1, 1, ... through the communication module 2A.

The standby-side communication module, that is, the communication module 2B in Fig. 1 monitors the state of each port (each of the first port 21 and the second port 22) of the control-side communication module 2A, through the first communication line 51 and the second communication line 52 connected to the first port 21 and the second port 22 of the communication module 2B. The control-side communication module 2A notifies the controller 20 of the states of communication with the field devices 1, 1, ... serving as slave devices, and the standby-side communication module 2B notifies the controller 20 of the state of the control-side communication module 2A. The controller 20 makes a comprehensive judgment based on those notifications and determines a communication module to which control should be granted.

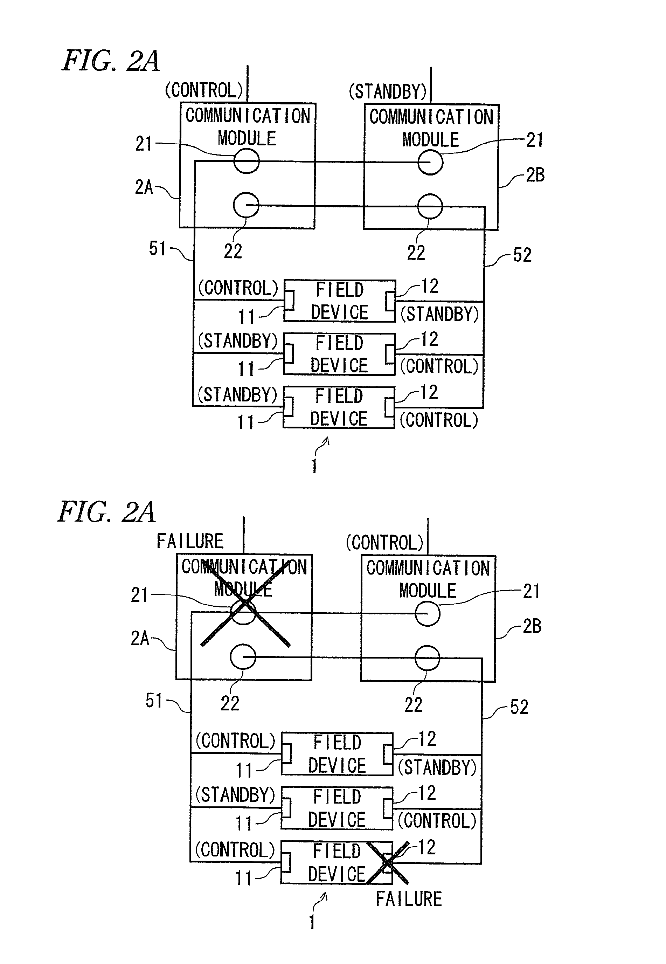

Fig. 2A shows a state where assignments of the ports of the field device 1 to the control/standby sides are different among the field devices 1, 1, ... . Although all the first ports 11 of the field devices 1, 1, ... are set as the control side is in Fig. 1, the second ports 12 in some of the field devices 1, 1, ...may be set as the control-side as shown in Fig. 2A. Thus, a port to which control should be granted in each field device 1 may be selected arbitrarily. In Fig. 2A, each field device 1 whose second port 12 is set as the control side exchanges data with the second port 22 of the control-side communication module 2A through the second communication line 52.

Fig. 2B shows a state where a failure has occurred in the communication module 2A in Fig. 2A. In this case, control is transferred to the communication module 2B. Each field device 1 in which control is granted to the first port 11 communicates with the first port 21 of the communication module 2B through the communication line 51, and each field device 1 in which control is granted to the second port 12 communicates with the second port 22 of the communication module 2B through the communication line 52.

In this manner, according to the embodiment, a PROFIBUS redundancy system is configured in combination with a redundant communication function in which each communication module has two ports, so that the communication module may have a redundant configuration in view from one port of each slave device. Accordingly, even if a failure occurs in one communication module, communication with both the ports of each slave device having the redundant function can be continued by the other communication module.

### [Second Embodiment]

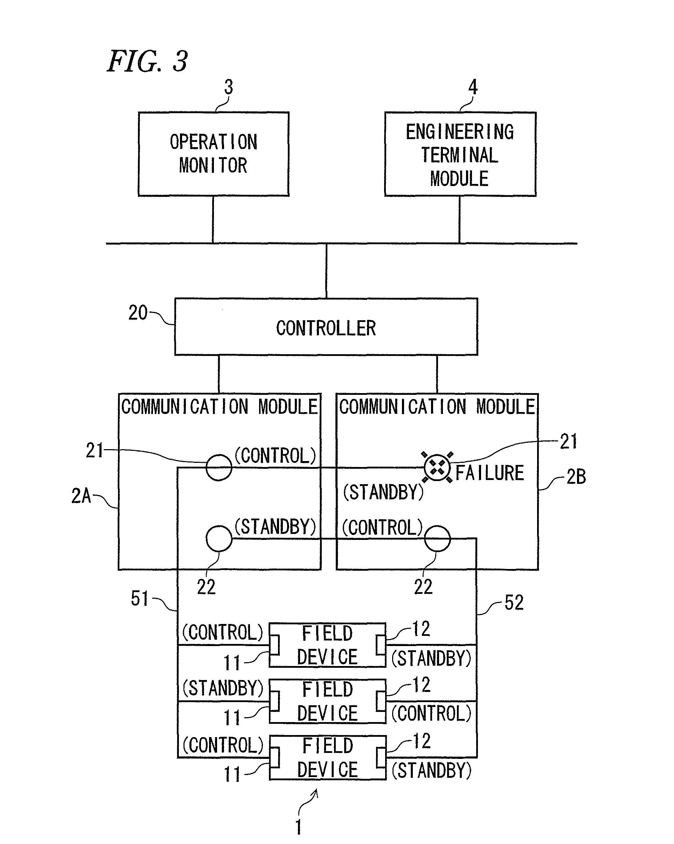

Fig. 3 is a block diagram showing the configuration of a field control system as a field communication system according to a second embodiment. In Fig. 3, elements the same as those in Fig. 1 are referred to by the same numerals correspondingly.

In the field communication system according to the embodiment, each port of each communication module can be selected as the control/standby side. That is, each of the first port 21 and the second port 22 of the communication module 2A in Fig. 3 can be set as the control/standby side independently. In this manner, normal ports can be combined suitably to obtain two ports as the control side and the standby side.

In Fig. 3, control is granted to the first port 21 of the communication module 2A and the second port 22 of the communication module 2B (the first port 21 of the communication module 2A and the second port 22 of the communication module 2B are set as the control side), and the second port 22 of the communication module 2A is set as the standby side. In this case, each control-side port of the field devices 1, 1, ... is connected to either the first port 21 of the communication module 2A or the second port 22 of the communication module 2B through the first communication 51 or the second communication line 52. Thus, all the field devices 1, 1, ... can communicate with the controller 20 through the communication modules.

In addition, as shown in Fig. 3, for example, it is also possible to deal with the case where there occurs a failure in the first port 21 of the communication module 2B.

In this manner, according to the embodiment, not each communication module but each port in the communication module is allowed to be set as the control/standby side. Thus, control based on ports can be switched. It is therefore possible to further enhance the redundancy configuration.

### [Third Embodiment]

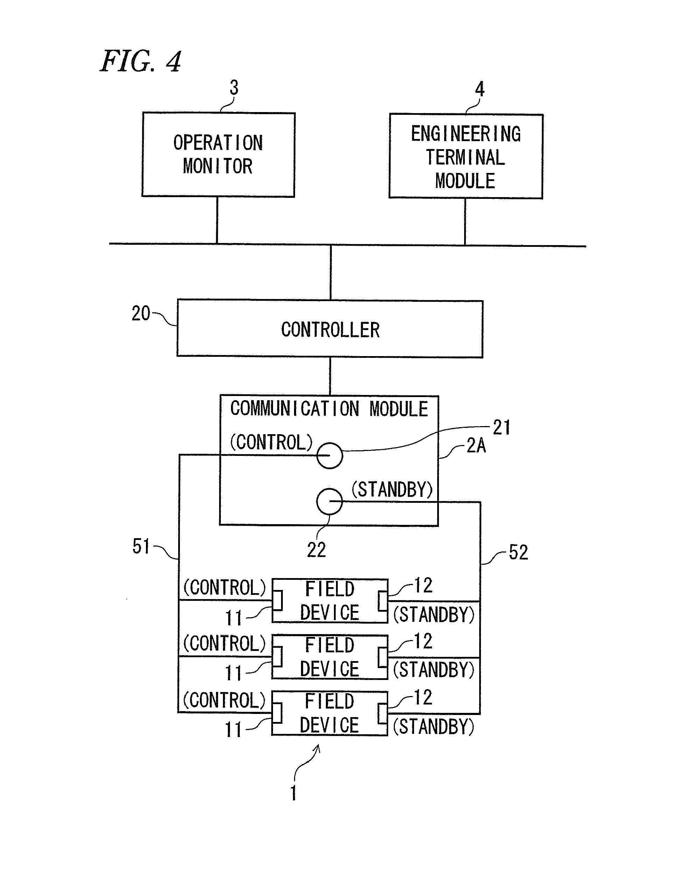

Fig. 4 is a block diagram showing the configuration of a field control system as a field communication system according to a third embodiment. In Fig. 4, elements the same as those in Fig. 1 are referred to by the same numerals correspondingly.

As shown in Fig. 4, in the field communication system according to the embodiment, communication modules are not made redundant, but one port of the communication module 2A is used as a control-side port and the other port is used as a standby-side port. Fig. 4 shows a state where the first port 21 of the communication module 2A is used as a control-side port and the second port of the communication module 2A is used as a standby-side port. The first port 21 of the communication module 2A is connected to the first ports 11, 11, ... of the field devices 1, 1, ... through the communication line 51, and the second port 22 of the communication module 2A is connected to the second ports 12, 12, ... of the field devices 1, 1, ... through the communication line 52.

In the embodiment, communication modules are not made redundant, but it is possible to build the redundancy configuration of the field devices 1, 1, ... as slave devices inexpensively.

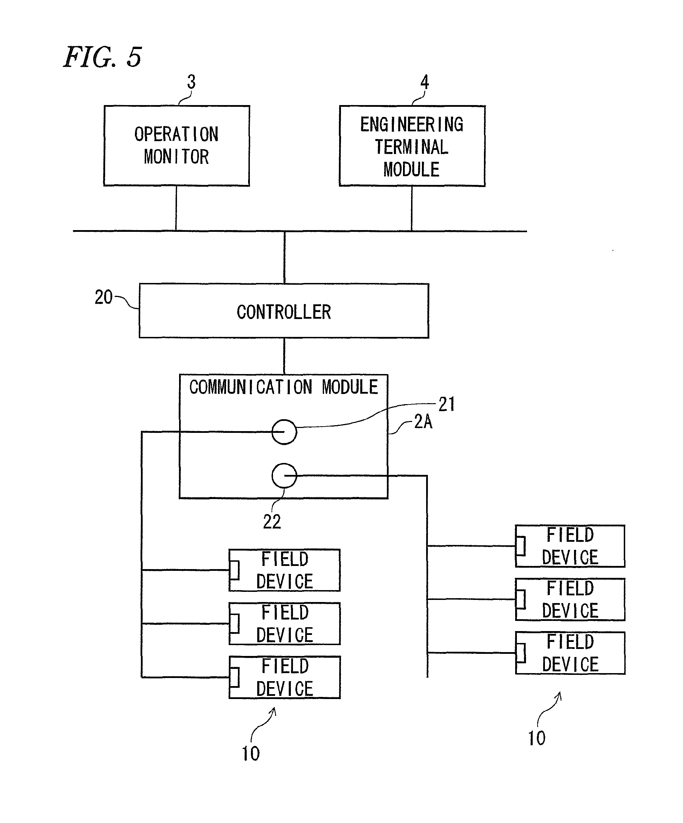

Fig. 5 shows an example of a configuration in which field devices each having one port can be supported by use of the field communication system according to the embodiment.

As shown in Fig. 5, one-port field devices 10, 10, ... which do not support redundancy of slaves can be assigned to the first port 21 and the second port 22 of the communication module 2A within the range of giving no relevance to the redundancy of slave devices. In this case, an independent PROFIBUS communication environment can be constructed for each port of the communication module 2A. In this manner, twice as many field devices as in the related art can be handled by one communication module.

In addition, when the field devices 10, 10, ... are connected and assigned to the first communication line 51 and the second communication line 52 in the field communication system according to the first embodiment shown in Fig. 1, the communication modules can be made redundant.

Basically, resources in each communication module have a fixed number of devices which can be engineered for each port. However, when setting is done by a user's request to make a difference in the maximum number of devices which can be engineered between two ports of the communication module, it is also possible to assign the resources of the communication module flexibly to each port.

According to the field communication system according to the embodiments, the first slave communication port and the first master communication port are connected to each other through the first communication line, and the second slave communication port and the second master communication port are connected to each other through the second communication line, so that the reliability of communication can be improved by use of the first master communication port and the second master communication port provided in the communication module.

In addition, when communication modules are made redundant, a redundancy configuration can be built in the communication modules in view from one port of each field device serving as a slave device. Accordingly, even if a failure occurs in one communication module, communication with both the ports of each slave device having the redundant function can be continued by the other communication module.

The scope of application of the invention is not limited to the aforementioned embodiments. The invention is applicable broadly to a field communication system in which communication is executed between field devices as slave devices and communication modules as master devices.

## Claims

1. A field communication system comprising:
a field device as a slave device, having a first slave communication port and a second slave communication port;
a communication module as a master device, having first master communication port and a second master communication port, configured to execute communication with the field device;
a first communication line configured to connect the first slave communication port with the first master communication port; and
a second communication line configured to connect the second slave communication port with the second master communication port.

2. The field communication system according to Claim 1, wherein:
a first communication module and a second communication module are provided as the communication module so that a redundancy configuration is formed by the first and second communication modules;
both the first master communication port of the first communication module and the first master communication port of the second communication module are connected to the first communication line; and
both the second master communication port of the first communication module and the second master communication port of the second communication module are connected to the second communication line.

3. The field communication system according to Claim 2, wherein:
each of the first master communication port and the second master communication port of the first communication module, and each of the first master communication port and the second master-side communication port of the second communication module can be selectively set as a control or standby side.

4. The field communication system according to any one of Claims 1 through 3, wherein:
PROFIBUS communication is performed between the field device and the communication module.
